Europäisches Patentamt

European Patent Office

Office européen des brevets

(11) Numéro de publication : **0 094 295**
**B1**

# FASCICULE DE BREVET EUROPÉEN

(45) Date de publication du fascicule du brevet :
02.01.86

(21) Numéro de dépôt : 83400875.7

(22) Date de dépôt : 02.05.83

(51) Int. Cl.⁴ : **B 60 G 11/20**, B 60 G 17/02,
B 60 G 21/04, F 16 F 1/14

(54) Suspension à bras oscillants pour un train de deux roues d'un véhicule.

(30) Priorité : 06.05.82 FR 8207909

(43) Date de publication de la demande :
16.11.83 Bulletin 83/46

(45) Mention de la délivrance du brevet :
02.01.86 Bulletin 86/01

(84) Etats contractants désignés :
DE GB IT SE

(56) Documents cités :
FR-A- 1 359 271
FR-A- 1 456 804
FR-A- 2 251 450
FR-A- 2 327 890
GB-A- 1 036 299
GB-A- 2 011 327
S.A.E. TRANSACTIONS, 1980, TECHNICAL PAPER
NO. 800484 K.R. BERG et al.: "Can composite materials compete in vehicle torsion members ?"

(73) Titulaire : **Société Nationale Industrielle Aérospatiale**
**Société anonyme dite:**
**37 Bld de Montmorency**
**F-75016 Paris (FR)**

(72) Inventeur : **Aubry, Jacques Antoine**
**2 avenue Marie Gasquet Domaine du Lac Bleu**
**F-13480 Cabries (FR)**
Inventeur : **Bonfils, Michel Robert**
**Chemin de la Mer**
**F-13760 Saint-Cannat (FR)**

(74) Mandataire : **Bonnetat, Christian et al**
**Cabinet PROPI Conseils 23 rue de Léningrad**
**F-75008 Paris (FR)**

## Description

La présente invention concerne une suspension pour un train de deux roues d'un véhicule, comprenant deux bras oscillant autour d'un axe transversal audit véhicule et portant chacun l'une desdites roues, ledit axe transversal d'oscillation desdits bras étant lui-même monté oscillant autour d'un axe transversal fixe dudit véhicule pour autoriser un débattement dans le sens longitudinal du fait que chaque bras oscillant est articulé sur un étrier lui-même articulé sur le châssis du véhicule.

Une telle suspension connue est par exemple décrite dans le brevet GB-A-1 036 299 et est généralement utilisée comme suspension arrière d'un véhicule automobile du type à traction avant. Grâce au débattement longitudinal qu'elle autorise aux roues, une telle suspension assure une bonne tenue de route au véhicule et un agréable confort aux passagers transportés.

Cependant, dans cette suspension connue, ledit axe transversal d'oscillation des bras est constitué d'un simple arbre transversal rigide, limitant les possibilités techniques de la suspension.

L'objet de la présente invention est de remédier à cet inconvénient et de perfectionner une telle suspension connue.

A cette fin, selon l'invention, la suspension du type décrit au-dessus est caractérisée en ce qu'elle comporte un ensemble de tubes concentriques en matière composite fibres-résine synthétique, reliant les deux bras, lesdits tubes dudit ensemble étant coaxiaux l'un à l'autre et solidaires à chacune de leurs extrémités, d'une part, l'un de l'autre et, d'autre part, de l'un desdits bras, et en ce que le tube extérieur dudit ensemble de tubes est relié au châssis du véhicule en au moins un point voisin du milieu de sa longueur de façon à permettre les oscillations de l'ensemble de tubes autour de l'articulation des étriers sur le châssis.

Ainsi, chaque moitié du tube extérieur dudit ensemble de tube agit comme barre de torsion pour le bras auquel elle est reliée, tandis que le tube intérieur dudit ensemble agit comme moyen de couplage anti-roulis entre lesdits bras. Grâce à la réalisation desdits tubes en matière composite fibres-résine synthétique, on obtient pour ceux-ci des caractéristiques mécaniques correspondant aux fonctions qu'ils remplissent et qu'il serait impossible d'obtenir avec des tubes d'acier de dimensionnement et poids comparables. On réalise donc ainsi une suspension qui, tout en étant simple, est légère, de sorte qu'elle permet d'obtenir un gain sur le poids total du véhicule et donc sur la consommation en carburant.

Dans un mode de réalisation avantageux, chaque bras comporte un manchon transversal creux dont la paroi externe tourillonne par rapport à l'étrier correspondant par l'intermédiaire de deux paliers espacés le long dudit axe transversal d'oscillation des bras et qui est traversé par l'une des extrémités dudit ensemble de tubes, ladite extrémité étant rendue solidaire de la paroi interne dudit manchon.

Il est avantageux que chaque étrier comporte deux paliers espacés le long de l'axe transversal fixe du véhicule et traversés par un arbre solidaire du châssis du véhicule.

De préférence, les paliers du manchon transversal des bras et les paliers des étriers sont du type palier en élastomère.

La liaison entre le châssis et la partie centrale de l'ensemble des tubes est avantageusement réalisée par l'intermédiaire d'un levier et d'une bielle de longueur ajustable permettant de régler l'orientation angulaire desdits bras et donc l'assiette du véhicule.

Dans une variante de réalisation, la liaison entre le châssis et la partie centrale de l'ensemble des tubes est réalisée par l'intermédiaire d'un levier et d'un vérin hydraulique permettant de régler pendant la marche du véhicule la position angulaire desdits bras et donc l'assiette du véhicule.

Les figures du dessin annexé feront bien comprendre comment l'invention peut être réalisée.

La figure 1 est une vue en élévation schématique d'un premier mode de réalisation d'une suspension conforme à l'invention.

La figure 2 est une vue, également en élévation schématique, d'un second mode de réalisation d'une suspension selon l'invention.

La figure 3 montre, une vue en dessus, par rapport à la figure 2, la moitié gauche d'une suspension conforme à l'invention, avec coupe selon la ligne III-III de la figure 2, la moitié droite de la suspension étant identique et symétrique de la moitié gauche.

La figure 4 montre, à plus grande échelle, le montage des bras de suspension sur le châssis du véhicule automobile, conformément au mode de réalisation de la figure 3 de la présente invention.

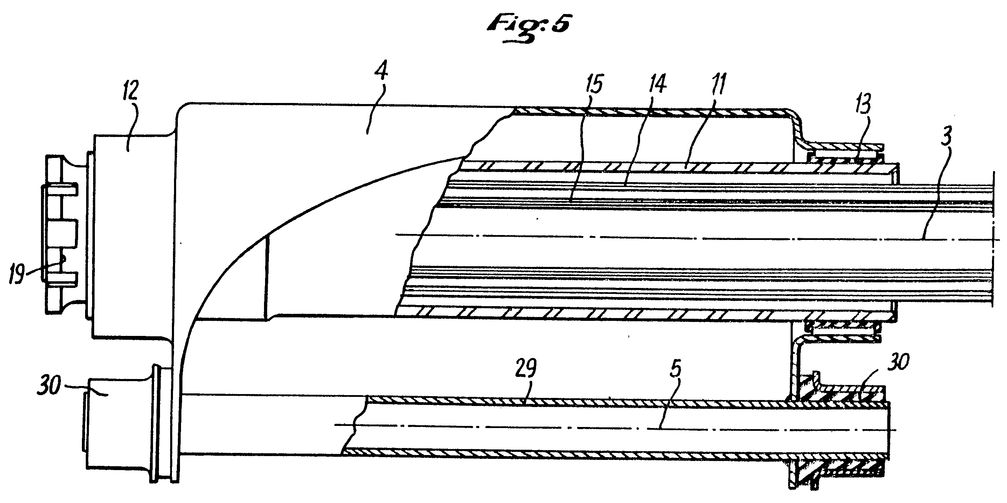

La figure 5 est une vue, avec coupe partielle selon la ligne V-V de la figure 4, du système de suspension de l'un des deux axes d'oscillation conformément à l'invention.

La figure 6 illustre le dispositif d'ancrage de l'ensemble de tubes et de correction d'assiette du véhicule.

Sur ces figures, des références identiques désignent des éléments semblables.

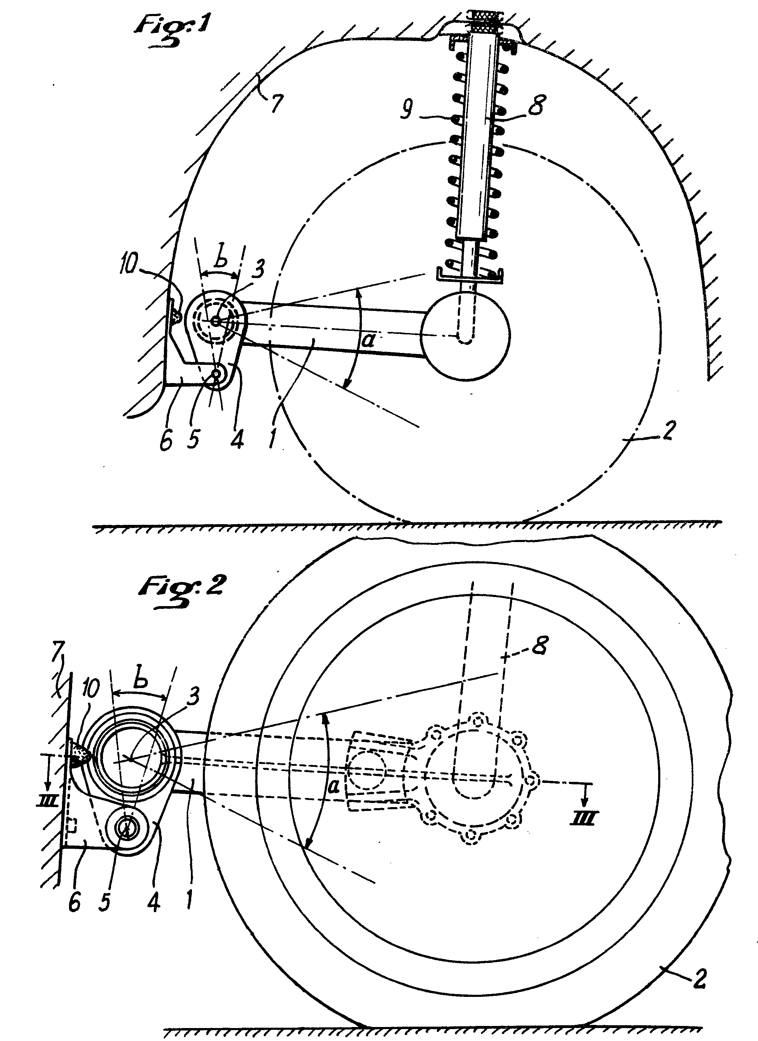

La suspension arrière du véhicule à traction avant, montrée sur la figure 1, est du type à roue tirée et comporte des bras de suspension 1. Une extrémité de chaque bras 1 porte une roue 2 à son extrémité, tandis que l'autre extrémité desdits bras est articulée en 3 à un étrier 4 lui-même articulé en 5, à une attache 6 solidaire du châssis 7 du véhicule (non représenté). De plus, chaque bras 1 est relié au châssis 7 par l'intermédiaire de l'agencement d'un amortisseur télescopique 8 et d'un ressort hélicoïdal 9, coaxiaux.

On voit ainsi que la roue 2 est susceptible d'un débattement vertical a autour de l' axe 3, et d'un débattement longitudinal b autour de l'axe 5. Des butées 10, par exemple en caoutchouc, sont prévues pour éviter que, accidentellement, les étriers 4 puissent venir heurter le châssis 7.

Les axes 3 et 5, qui sont parallèles l'un à l'autre, puisque transversaux tous deux au véhicule, définissent un plan qui, en position de repos du véhicule, est au moins sensiblement vertical.

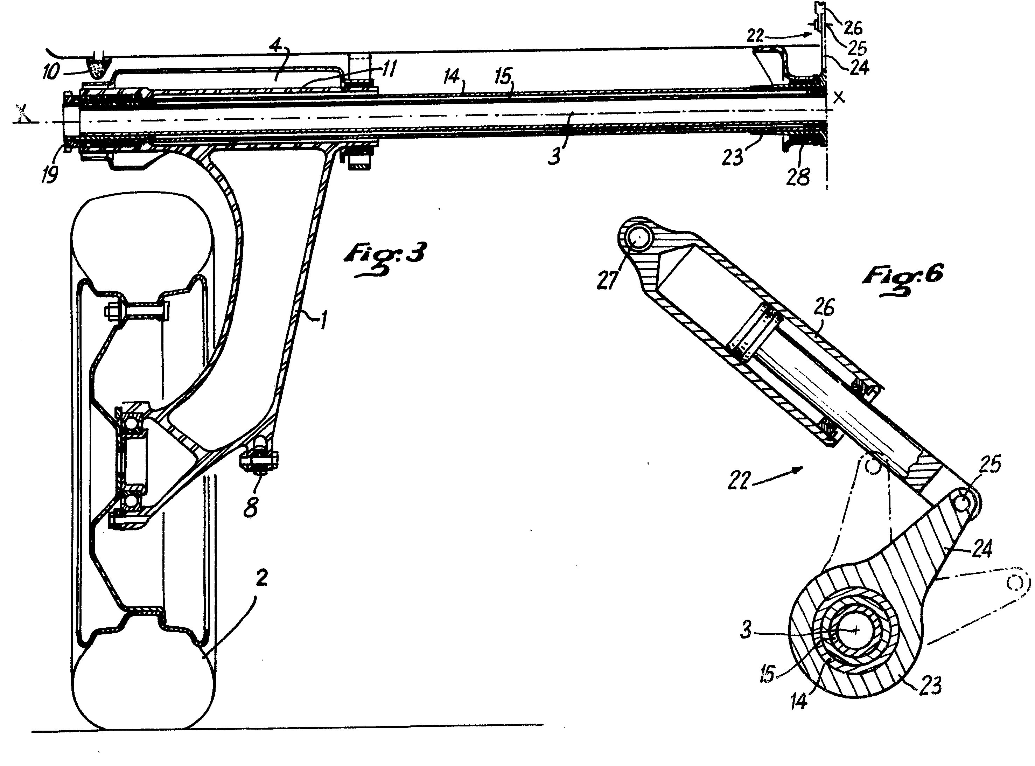

Dans la variante de réalisation illustrée par les figures 2 à 4, les ressorts hélicoïdaux 9 ont été supprimés et remplacés par le système de rappel élastique et de couplage anti-roulis décrit dans la demande de brevet français 82 01344 déposée le 28 janvier 1982 au nom de la Demanderesse.

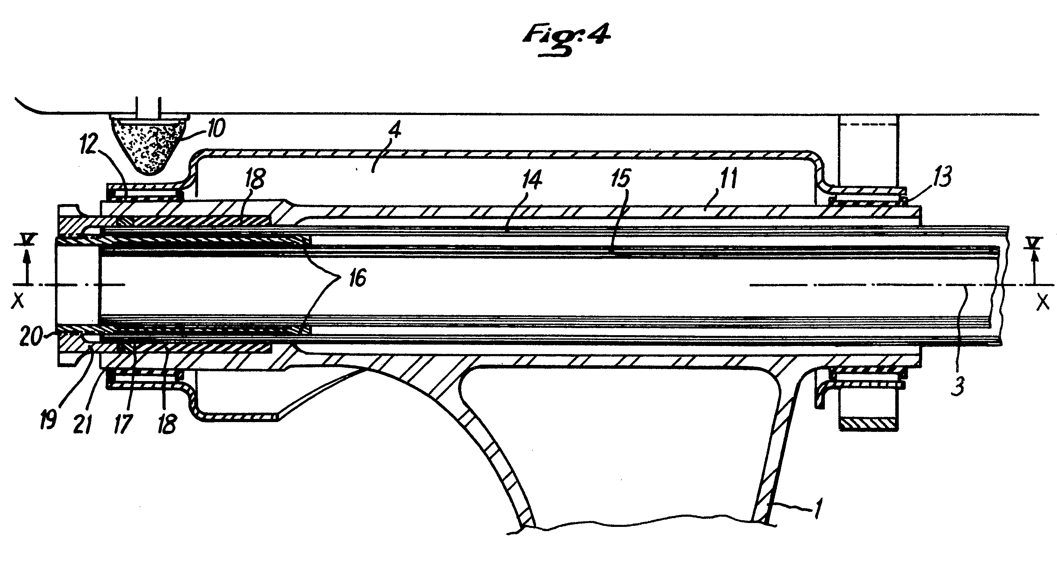

Comme le montrent les figures 3 et 4, chaque bras 1 comporte un manchon allongé 11 d'axe X-X transversal audit bras et confondu avec l'axe 3.

Aux deux extrémités du manchon 11 sont agencés des paliers 12 et 13, respectivement, reliant lesdits bras 1 à l'étrier 4 correspondant. Les paliers 12 et 13, dont l'axe est confondu avec l'axe X-X sont de préférence du type lamifié et permettent donc la rotation des bras 1 autour dudit axe X-X.

Les deux bras 1 de la suspension d'un train de deux roues 2 sont reliés l'un à l'autre par un ensemble de deux tubes 14 et 15, concentriques l'un à l'autre det centrés sur l'axe X-X. Les deux tubes 14 et 15 sont réalisés en une matière composite constituée de fibres (de verre, de carbone, de bore etc... ou d'un mélange de ces matières) enrobées d'une résine synthétique, par la mise en œuvre de tout procédé connu (bobinage filamentaire, superposition de tresses, tissage, etc...) permettant d'obtenir pour lesdits tubes des valeurs élevées du rapport R/E, dans lequel R est la contrainte à la rupture et E le module d'élasticité.

Les tubes 14 et 15 sont rendus solidaires l'un de l'autre à leurs deux extrémités, par exemple par collage avec interposition d'une douille rigide intermédiaire 16.

Les extrémités solidaires de tubes 14 et 15, ainsi renforcées par la bague 16, traversent les manchons 11 des deux bras 1 couplés et sont logées dans un logemnet 17 desdits manchons prévu à côté du palier extérieur 12 et sont rendues solidaires du bras 1 correspondant par friction. A cet effet, dans chaque logement 17 est prévue une douille 18 élastique, par exemple en un élastomère tel qu'un polyuréthane, entourant l'extrémité extérieure du tube 14, tandis qu'on prévoit un écrou de compression 19, susceptible de se visser dans un filetage 20 de la bague 16. Ainsi, en vissant l'écrou 19 on peut comprimer la douille 18, éventuellement par l'intermédiaire d'une bague coulissante 21, de sorte que ladite douille 18 se dilate radialement. La pression statique ainsi créée entre la douille 18 et la paroi interne du logement 17, entre la douille 18 et le tube 14, entre le tube 14 et la douille 16 et, enfin, entre la douille 16 et le tube 15 solidarise par frottement l'ensemble des tubes 14 et 15 des deux bras de suspension 1.

De plus, le tube extérieur 14 est ancré en son milieu au châssis 7, par exemple par l'intermédiaire d'un dispositif 22 correcteur d'assiette. Ce dispositif 22 peut comporter une douille 23 collée sur la paroi extérieure du tube 14 et solidaire d'une chape 24 articulée en 25 à un vérin hydraulique 26, lui-même articulé 27 au châssis 7. La douille 23 tourillonne dans un palier 28 solidaire du châssis 7.

On voit ainsi que le tube extérieur 14 forme un tube de torsion reliant les deux bras de suspension 1 et fixé de façon variable en son milieu au châssis 7. Par suite de cet ancrage médian, chaque moitié du tube de torsion 14 comprise entre le dispositif 22 et une extrémité agit comme une barre de torsion indépendante de l'autre. Bien entendu, toute torsion d'une desdites moitiés du tube 14 est transmise à l'extrémité correspondante du tube intérieur 15 qui la répercute à son extrémité. Ce tube intérieur 15 agit donc comme dispositif de couplage anti-roulis des deux bras 1 de la suspension.

On comprend aisément que par commande de la position du piston du vérin hydraulique 26 (grâce à des moyens non représentés), donc de la distance entre les axes 25 et 27, on peut faire tourner la douille 23 autour de l'axe X-X et donc communiquer une rotation autour dudit axe à l'ensemble des tubes 14-15 permettant de régler l'orientation angulaire des bras 1 autour de l'axe X-X et donc l'assiette du véhicule.

Par ailleurs, les étriers 4 sont articulés au châssis 7 par l'intermédiaire d'arbres 29 d'axe 5. Les arbres 29 tourillonnent par rapport aux étriers 4 grâce à des paliers 30, tandis qu'ils sont rigidement liés aux pattes 6, elles-mêmes fixées sur le châssis 7. Ainsi, l'ensemble des tubes 14 et 15 peut pivoter autour des arbres 29 pour donner le débattement longitudinal b, tandis que l'ensemble desdits tubes 14 et 15 peut se tordre autour de son axe pour donner le débattement vertical a.

**Revendications**

1. Suspension pour un train de deux roues d'un véhicule, comprenant deux bras (1) oscillant autour d'un axe transversal (3) audit véhicule et portant chacun l'une desdites roues, ledit axe transversal (3) d'oscillation desdits bras (1) étant lui-même monté oscillant autour d'un axe transversal (5) fixe du véhicule pour autoriser un débattement dans le sens longitudinal du fait que chaque bras oscillant (1) est articulé sur un étrier (4) lui-même articulé sur le châssis (7) du véhicule, caractérisée en ce qu'elle comporte un ensemble de tubes concentriques (14, 15) en matière composite fibres-résines synthétiques, reliant les deux bras (1), lesdits tubes dudit ensemble étant coaxiaux l'un à l'autre et solidaires à chacune de leurs extrémités, d'une part, l'un de l'autre et, d'autre part, de l'un desdits bras (1), et en ce que le tube extérieur (14) dudit ensemble de tubes est relié au châssis du véhicule en au moins un point (22) voisin du milieu de sa longueur de façon à permettre les oscillations de l'ensemble de tubes autour de l'articulation des étriers sur le châssis.

2. Suspension selon la revendication 1, caractérisée en ce que chaque bras (1) comporte un manchon transversal creux dont la paroi externe tourillonne par rapport à l'étrier (4) correspondant par l'intermédiaire de deux paliers (12, 13) espacés le long dudit axe transversal (3) d'oscillation des bras (1) et qui est traversé par l'une des extrémités dudit ensemble de tubes (14, 15), ladite extrémité étant rendue solidaire de la paroi interne dudit manchon.

3. Suspension selon l'une des revendications 1 ou 2, caractérisée en ce que chaque étrier (4) comporte deux paliers espacés (30) le long de l'axe transversal fixe (5) du véhicule et traversés par un arbre (29) solidaire du châssis (7) du véhicule.

4. Suspension selon l'une des revendications 1 à 3, caractérisée en ce que les paliers (12, 13) du manchon transversal (11) des bras (1) et les paliers (30) des étriers (4) sont du type palier en élastomère.

5. Suspension selon l'une des revendications 1 à 4, caractérisée en ce que la liaison entre le châssis (7) et la partie centrale de l'ensemble des tubes (14, 15) est réalisée par l'intermédiaire d'un levier (24) et d'une bielle de longueur ajustable permettant de régler l'orientation angulaire desdits bras (1) et donc l'assiette du véhicule.

6. Suspension selon l'une des revendications 1 à 4, caractérisée en ce que la liaison entre le châssis (7) et la partie centrale de l'ensemble des tubes (14, 15) est réalisée par l'intermédiaire d'un levier (24) et d'un vérin hydraulique (26) permettant de régler pendant la marche du véhicule la position angulaire desdits bras (1) et donc l'assiette du véhicule.

## Claims

1. A suspension for a set of two wheels of a vehicle, comprising two arms (1) oscillating about a transverse axis (3) of said vehicle and each bearing one of said wheels, said oscillation transverse axis (3) of said arms (1) itself oscillating about a fixed transverse axis (5) of said vehicle to allow a spring movement in the longitudinal direction as each oscillating arm (1) is articulated on a strirrup piece (4) itself articulated on the chassis (7) of the vehicle, characterized in that the suspension comprises an assembly of concentric tubes (14, 15) made of composite fibre-synthetic resin material, connecting the two arms (1), said tubes of said assembly being coaxial to each other and fast at each of their ends, on the one hand, with each other and, on the other hand, with one of said arms (1), and in that the outer tube (14) of said tube assembly is connected to the chassis of the vehicle at at least one point (22) adjacent the centre of its length so as to allow the oscillations of the tube assembly about the articulation of the stirrups on the chassis.

2. The suspension of Claim 1, characterized in that each arm (1) comprises a hollow transverse sleeve whose outer wall pivots with respect to the corresponding stirrup piece (4) via two bearings (12, 13) spaced along the transverse axis (3) of oscillation of the arms (1) and which is traversed by one of the ends of said tube assembly (14, 15), said end being rendered fast with the inner wall of said sleeve.

3. The suspension of one of Claims 1 or 2, characterized in that each stirrup piece (4) comprises two bearings (30) spaced along the transverse fixed axis (5) of the vehicle and traversed by a shaft (29) fast with the chassis (7) of the vehicle.

4. The suspension of one of Claims 1 to 3, characterized in that the bearings (12, 13) of the transverse sleeve (11) of the arms (1) and the bearings (30) of the stirrup pieces (4) are of the elastomer bearing type.

5. The suspension of one of Claims 1 to 4, characterized in that the connection between the chassis (7) and the central part of the tube assembly (14, 15) is effected via a lever (24) and a connecting rod of adjustable length enabling the angular orientation of said arms (1) and therefore the inclination of the vehicle to be adjusted.

6. The suspension of one of Claims 1 to 4, characterized in that the connection between the chassis (7) and the central part of the tube assembly (14, 15) is effected via a lever (24) and a hydraulic jack (26) enabling the angular position of said arms (1) and therefore the inclination of the vehicle to be adjusted whilst the vehicle is moving.

## Patentansprüche

1. Aufhängung für ein Radfahrgestell eines Fahrzeugs, bestehend aus zwei um eine Querachse (3) am Fahrzeug schwenkbaren Armen (1), von denen jeweils eines ein Rad trägt, wobei die Querachse (3) der Schwenkarme (1) ihrerseits um eine fest am Fahrzeug liegende Querachse (5) schwenkbar eingesetzt ist, um in Längsrichtung einen Ausschlag aufgrund der Tatsache ausführen zu können, daß jeder Schwenkarm (1) an einem am Chassis (7) des Fahrzeugs seinerseits angelenkten Bügel (4) angelenkt ist, gekennzeichnet durch einen die beiden Arme (1) verbindenden Satz Rohre (14, 15) aus synthetischem Faserharz-Verbundstoff, wobei die Rohre des Satzes zueinander koaxial liegen und mit jeweils einem ihrer Enden einerseits miteinander und andererseits mit einem der Arme (1) verbunden sind, und daß das äußere Rohr (14) des Rohrsatzes mit dem Fahrzeugchassis an einer zumindest in der Nähe der Mitte seiner Länge liegenden Stelle (22) derart verbunden ist, so daß der Rohrsatz um das Gelenk der Bügel am Chassis Schwenkbewegungen durchführen kann.

2. Aufhängung nach Anspruch 1, dadurch gekennzeichnet, daß jeder Arm (1) eine hohle Quermuffe aufweist, deren äußere Wandung gegenüber dem entsprechenden Bügel (4) mit Hilfe von zwei Lagern (12, 13) drehbar ist, die längs der Querschwenkachse (3) der Arme (1) in einem Abstand voneinander angeordnet sind, wobei jeder Arm (1) von einem der Enden des Rohrsatzes (14, 15) durchquert wird und wobei dieses Ende mit der inneren Wandung der Muffe formschlüssig verbunden ist.

3. Aufhängung nach einem der Ansprüche 1 oder 3, dadurch gekennzeichnet, daß jeder Bügel (4) zwei längs der festen Querachse (5) des Fahrzeugs getrennt angeordnete und von einer formschlüssig mit dem Chassis (7) des Fahrzeuges verbundenen Welle (29) durchquerte Lager (30) aufweist.

4. Aufhängung nach einem der Ansprüche 1 bis 3, dadurch gekennzeichnet, daß die Lager (12, 13) der Quermuffe (11) der Arme (1) sowie die Lager (30) der Bügel (4) als Elastomerlager ausgebildet sind.

5. Aufhängung nach einem der Ansprüche 1 bis 4, dadurch gekennzeichnet, daß die Verbindung zwischen dem Chassis (7) und dem mittleren Teil des Rohrsatzes (14, 15) mit Hilfe eines Hebels (24) und längs verstellbaren Zwischengliedes geschaffen wird, durch die die Winkelausrichtung der Arme (1) und somit die Trimmung des Fahrzeugs regelbar ist.

6. Aufhängung nach einem der Ansprüche 1 bis 4, dadurch gekennzeichnet, daß die Verbindung zwischen dem Chassis (7) und dem mittleren Teil des Rohrsatzes (14, 15) mit Hilfe eines Hebels (24) und eines Arbeitszylinders (26) geschaffen wird, durch die die Winkelstellung der Arme (1) und somit die Trimmung des Fahrzeugs, während sich dieses in Bewegung befindet, regelbar ist.

0 094 295

Fig: 1

Fig: 2

Fig. 3

Fig. 6

0 094 295

*Fig:4*

Fig.5